# EUROPEAN PATENT APPLICATION

(11) **EP 2 723 070 A1**
(43) Date of publication of application: **23.04.2014**
(21) Application number: 13186882.0
(22) Date of filing: 01.10.2013
(51) Int. Cl.: H04N 7/18

(54) **Access control system and indoor unit therefor**

(30) Priority: 18.10.2012 BE 201200706
(71) Applicant: Niko NV, 9100 Sint-Niklaas (BE)
(72) Inventor: Tas, Johan Helena Alice, 9100 Sint-Niklaas (BE); De Vos, Pieter Arthur Anna, 2600 Berchem (BE); Veldeman, Pol Raymond Diana, 9140 Temse (BE); Apts, Yoeri Jozef Valentine, 1981 Zemst (BE)
(74) Representative: D'Halleweyn, Nele Veerle Trees Gertrudis

(57) **Abstract**

Indoor unit for an access control system, comprising a carrier and a projector, processor module and receiver carried by the carrier; wherein the receiver is configured to receive video data recorded by an outdoor unit of the access control system; and the processor module is configured to process these received video data for projection onto a wall by means of the projector.

## Description

The present invention relates to an indoor unit for an access control system and to an access control system comprising an indoor unit and an outdoor unit.

Existing access control systems comprise an outdoor unit outside a building and one or more indoor units in the building. An outdoor unit typically comprises a doorbell, a camera, a microphone and a loudspeaker. An indoor unit typically comprises a screen on which an image of the person who has rung the bell is displayed, a phone receiver with a microphone, and optionally a button for opening the door.

The present invention has for its object to provide an indoor unit for an access control system, which indoor unit is compact and multifunctional and can be manufactured such that it can be readily integrated into a building with any random interior.

An indoor unit according to the invention comprises for this purpose a carrier and a projector, a processor module and a receiver carried by the carrier. The receiver is configured for optionally wireless reception of video data recorded by an outdoor unit of the access control system. The processor module is configured to process these received video data for projection onto a wall by means of the projector. Because use is not made of a screen but of a projector, the indoor unit can take a compact and minimalist form. The carrier can in addition be formed such that it fulfils additional functions.

The projector and the processor module are preferably built into the carrier such that they are not particularly noticeable in the space where the indoor unit is placed. The projector comprises among other parts a projector lens and a light source, and is preferably a pico projector which is sufficiently small that it can be built in in convenient manner.

The carrier is preferably configured for mounting against a wall, wherein the projector is positioned on or in the carrier such that an image associated with the received video data is projected onto the wall. The indoor unit can in this way be mounted at a suitable height against a wall.

The carrier preferably comprises a substantially horizontal support surface on which all manner of objects, such as keys or a mobile phone, can be placed. The support surface can be provided for this purpose with one or more recesses which prevent the object sliding off the support surface.

According to a possible embodiment, the carrier is substantially plate-like. The carrier preferably has a first side intended for mounting against a wall and an opposite second side in which the projection lens is incorporated. The carrier can for instance comprise on the second side a corner part which is directed obliquely upward and into which at least the projection lens is incorporated. According to a particularly advantageous embodiment, the carrier is formed with a vertical plate-like part which transposes into a horizontal plate-like part, the vertical part being intended for mounting against a wall. The horizontal part can then for instance be formed with a corner part which is directed obliquely or vertically upward and into which the projector lens is incorporated. According to another variant, the horizontal part is formed with a side part which is directed obliquely or vertically upward and into which the projector lens is incorporated. It is noted for the sake of completeness that the invention does not require the projector lens to be built into a part which is directed obliquely upward, and that it can also be built into the horizontal part of the carrier, in which case the carrier can take a completely flat form. Nor is it necessary for the carrier to be formed with a vertical part. The skilled person will appreciate that the carrier can also be mounted against a wall without such a vertical part.

The indoor unit can further comprise one or more operating means controllable by a user, as well as a transmitter configured to transmit signals to the outdoor unit or to another unit, such as a door unlocking mechanism, in accordance with signals registered by the operating means. The operating means can for instance be motion detectors, particularly gesture recognition detectors, and/or voice recognition means and/or keys which can be operated by the user. The motion detectors can for instance be provided on a front side of the carrier, i.e. the front side situated at a distance from the wall against which the carrier is mounted. According to a variant, motion detectors can be provided on or in a vertical part of the carrier mounted against the wall. In this way a user will be able to operate the indoor unit by means of gestures, and for instance unlock the door when a known person is at the door.

Integrated into the carrier according to a further developed embodiment is an inductive charging station which is configured to wirelessly charge a mobile device such as a smart phone, wherein the carrier is configured for placing of the mobile device thereon.

The indoor unit preferably further comprises a loudspeaker, the receiver is configured to receive audio data from an outdoor unit, and the processor module is configured to have the loudspeaker play back the audio data. The indoor unit can further comprise a microphone and/or a camera for video communication with another indoor unit or with an outdoor unit.

The invention further relates to an assembly for an access control system comprising an embodiment of an indoor unit as described above; and an outdoor unit configured to record video data of a person standing at the door and to transmit this video data to the receiver of the indoor unit. The outdoor unit typically comprises a camera, a loudspeaker, a microphone and transmitting means configured to transmit video data and audio data recorded by respectively the camera and the microphone.

The present invention will be further elucidated on the basis of a number of by no means limitative exemplary embodiments of the assembly according to the invention, with reference to the accompanying drawings, in which:
Figure 1 is a perspective view of a first embodiment of an indoor unit according to the invention;
Figure 2 is a schematic top view of the embodiment of figure 1 in which the location of the different components is shown schematically; and
Figure 3 is a perspective view of a second embodiment of an indoor unit according to invention.

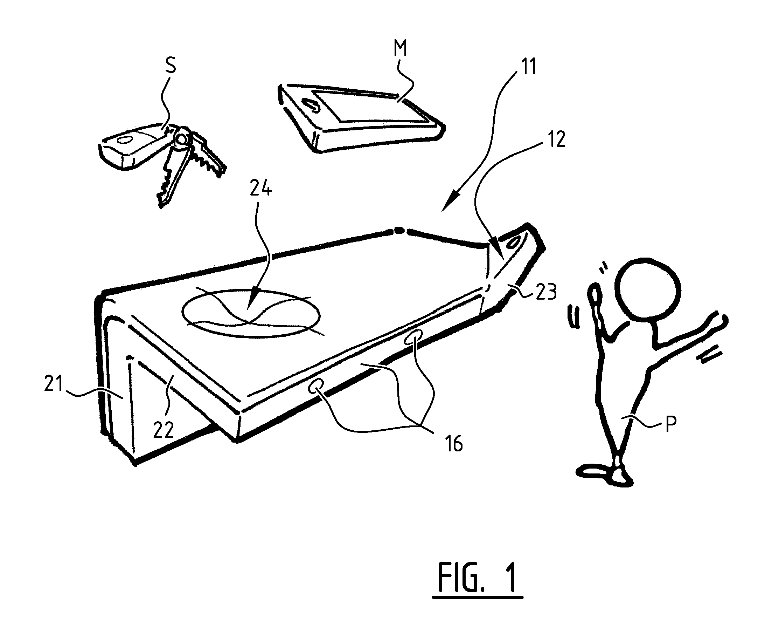

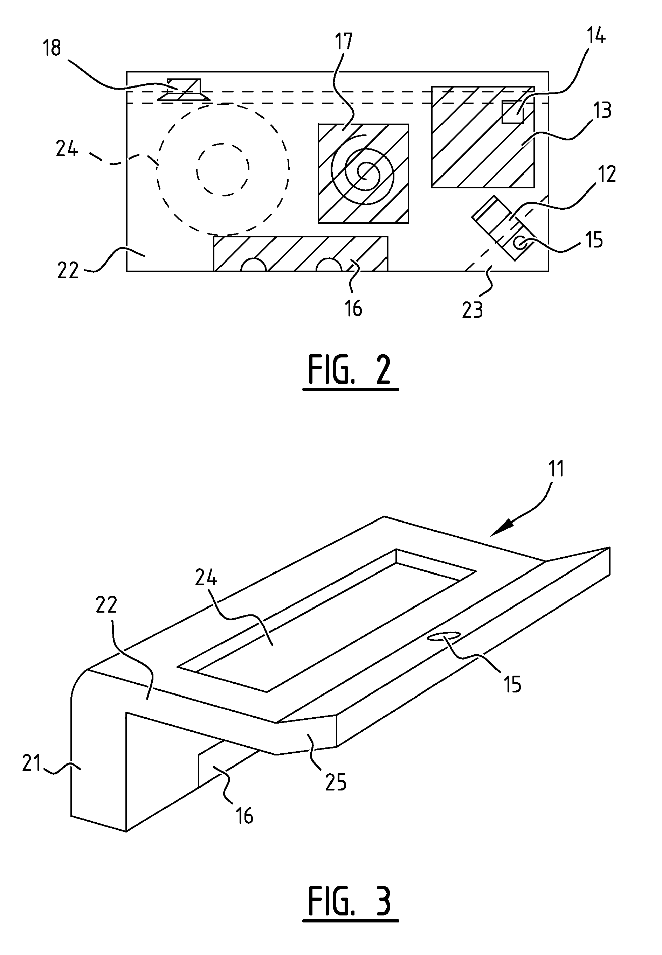

Figures 1 and 2 illustrate a first embodiment of an indoor unit for an access control system according to the invention. An access control system typically comprises an outdoor unit for placing outside a building, close to an outside door thereof, and one or more indoor units for placing in the building. A person wishing to enter the building rings at the outdoor unit, and a person P in the building can see this person via the indoor unit and optionally admit him/her. The outdoor unit (not illustrated) typically comprises a camera configured to record video data of a person standing at the door, a loudspeaker, a microphone for recording speech signals and transmitting means configured to transmit video data and audio data recorded by respectively the camera and the microphone.

The indoor unit comprises a carrier 11 into which are built a projector 12, a processor module 13 and a receiver 14. Receiver 14 is configured to receive video data recorded by the outdoor unit of the access control system. Processor module 13 is configured to process this received video data for projection onto a wall by means of projector 12. The projector is for instance a pico projector (also referred to as a pocket projector) with properties similar to those of the PicoPix Pocket projector from Philips. Projector 12 comprises a projector lens 15, a light source (not illustrated) and the necessary hardware and software known to the skilled person.

Carrier 11 is formed with a vertical plate-like part 21 which transposes into a horizontal plate-like part 22 formed with a corner part 23 which directed obliquely upward and into which projector lens 15 is incorporated. Vertical part 21 is intended for mounting against a wall. Projector 12 will in this way be able to project an image onto this wall on the basis of the received video data. The properties of projector 12 and/or the dimensions of carrier 11 are chosen such that a good image is obtained on the wall.

Horizontal part 22 of the carrier forms a substantially horizontal support surface, for instance for a set of keys S, a mobile phone M and so on. In order to facilitate placing on the support surface the horizontal part 22 can be provided on its upper side with one or more recesses 24.

The indoor unit can further comprise one or more operating means controllable by a user, such as gesture recognition means 16, for instance in the form of a so-called gesture webcam. A person P in the building can in this way communicate a determined instruction to the indoor unit, for instance to open the door, by making a gesture. Further provided for this purpose is a transmitter which is configured to transmit signals to the outdoor unit or to another unit, such as the control for the door locking/unlocking, in accordance with gestures recorded by the gesture recognition means. According to another option (not illustrated), the operating means can be voice recognition means and/or keys controllable by a user, optionally in combination with gesture recognition means.

In the illustrated embodiment a gesture webcam 16 is provided in horizontal part 22, on the front side thereof. According to another option, it could be provided in or on vertical part 21.

An inductive charging station 17 can be integrated into the carrier, this station being configured to wirelessly charge a mobile device M such as a smart phone. The indoor unit further comprises a loudspeaker 18, receiver 14 is also configured to receive audio data from an outdoor unit and processor module 13 is configured to have loudspeaker 18 play back the audio data.

Figure 3 illustrates a second embodiment of an indoor unit according to the invention, wherein similar components are designated with the same reference numeral as in the variant of figures 1 and 2. According to this variant, projector lens 15 is built into a side part 25 directed obliquely upward, and gesture recognition means 16 are built into vertical part 21.

For both the first and the second embodiment the skilled person will appreciate that other operating means can also be provided in addition to or instead of the gesture recognition means, such as for instance speech recognition means or keys.

The skilled person will appreciate that the invention is not limited to the above illustrated exemplary embodiments and that many variants can be envisaged without departing from the scope of the invention, which is defined solely by the following claims.

## Claims

1. Indoor unit for an access control system, comprising a carrier and a projector, processor module and receiver carried by the carrier;
wherein the receiver is configured to receive video data recorded by an outdoor unit of the access control system; and
the processor module is configured to process these received video data for projection onto a wall by means of the projector.

2. Indoor unit as claimed in claim 1, **characterized in that** the projector and processor module are built into the carrier.

3. Indoor unit as claimed in claim 1 or 2, **characterized in that** the projector is a pico projector.

4. Indoor unit as claimed in any of the foregoing claims, **characterized in that** the carrier is configured for mounting against a wall, and that the projector is positioned on or in the carrier such that an image associated with the received video data is projected onto the wall.

5. Indoor unit as claimed in any of the foregoing claims, **characterized in that** the carrier comprises a substantially horizontal support surface; and/or that the carrier is substantially plate-like.

6. Indoor unit as claimed in any of the foregoing claims, **characterized in that** the projector comprises a projector lens and a light source.

7. Indoor unit as claimed in claim 6, **characterized in that** the carrier has a first side intended for mounting against a wall and an opposite second side in which the projection lens is incorporated.

8. Indoor unit as claimed in claim 6 or 7, **characterized in that** the carrier comprises a corner part which is directed obliquely upward and that at least the projection lens is incorporated into this corner part.

9. Indoor unit as claimed in any of the foregoing claims, **characterized in that** the carrier is formed with a vertical plate-like part which transposes into a horizontal plate-like part, the vertical part being intended for mounting against a wall, wherein the horizontal part is preferably formed with a corner part which is directed obliquely or vertically upward and into which a projector lens is incorporated; and/or with a side part which is directed obliquely or vertically upward and into which a projector lens is incorporated.

10. Indoor unit as claimed in any of the foregoing claims, **characterized in that** the indoor unit comprises one or more operating means controllable by a user, and comprises a transmitter configured to transmit signals to the outdoor unit or to another unit in accordance with signals registered by the operating means; wherein the operating means preferably comprises one of the following: motion detectors, particularly gesture recognition detectors, voice recognition means, keys which can be operated by the user.

11. Indoor unit as claimed in claims 7 and 10, **characterized in that** the motion detectors are provided on the opposite second side.

12. Indoor unit as claimed in claims 9 and 10, **characterized in that** the motion detectors are provided on or in the vertical part.

13. Indoor unit as claimed in any of the foregoing claims, **characterized in that** an inductive charging station is integrated into the carrier which is configured to wirelessly charge a mobile device such as a smart phone, and that the carrier is configured for placing of the mobile device thereon.

14. Indoor unit as claimed in any of the foregoing claims, further comprising:
- a loudspeaker, wherein the receiver is configured to receive audio data from an outdoor unit, and the processor module is configured to have the loudspeaker play back the audio data; and/or
- a microphone and/or a camera for video communication with another indoor unit or with an outdoor unit.

15. Assembly for an access control system comprising an indoor unit as claimed in any of the foregoing claims and an outdoor unit with a camera, which outdoor unit is configured to record video data of a person standing at the door and to transmit this video data to the receiver of the indoor unit; wherein the outdoor unit preferably comprises a camera, a loudspeaker, a microphone and transmitting means configured to transmit video data and audio data recorded by respectively the camera and the microphone.
